# EUROPEAN PATENT SPECIFICATION

(11) **EP 2 407 668 B1**
(45) Date of publication and mention of the grant of the patent: **30.03.2016**
(21) Application number: 11151252.1
(22) Date of filing: 18.01.2011
(51) Int. Cl.: F04C 18/02, F04C 28/26, F04C 23/00, F04C 29/12, F04C 28/16, F16K 17/04

(54) **Scroll compressor**
Spiralverdichter
Compresseur à spirales

(30) Priority: 12.07.2010 KR 20100067100
(43) Date of publication of application: 18.01.2012
(73) Proprietor: LG Electronics Inc., Youngdungpo-gu Seoul 150-721 (KR)
(72) Inventor: Kim, Pilhwan, Gyeongsangnam-Do (KR); Roh, Minwoo, Gyeongsangnam-Do (KR); Oh, Haejin, Gyeongsangnam-Do (KR); Choi, Sungwoo, Gyeongsangnam-Do (KR)
(74) Representative: Vossius & Partner Patentanwälte Rechtsanwälte mbB

(56) References cited:
- WO-A1-2007/114531
- KR-A- 20060 014 847
- US-A1- 2003 202 886
- US-A1- 2009 169 405

## Description

The present invention relates to a scroll compressor, and particularly, to a scroll compressor capable of preventing vacuumization by returning a part of a refrigerant discharged to a high pressure space to a low pressure space when the low pressure space is vacuumized during an operation.

A scroll compressor indicates a compression apparatus which forms a pair of compression chambers which consecutively move between a fixed wrap and an orbiting wrap while an orbiting scroll performs an orbiting motion in a state that a fixed scroll is fixed to an inner space of a hermetic container, and the orbiting wrap of the orbiting scroll is interlocked with the fixed wrap of the fixed scroll.

This scroll compressor can have a higher compression ratio than other types of compressors, and can obtain a stable torque since a suction process, a compression process and a discharge process for a refrigerant are smoothly performed. Owing to these advantages, the scroll compressor is being widely applied to an air conditioning system as a refrigerant compression apparatus.

In the scroll compressor, a volume of the compression chamber is gradually decreased while the orbiting scroll performs an orbiting motion, thereby compressing a refrigerant filled in the compression chamber. Once the refrigerant is compressed with a predetermined compression ratio, the refrigerant is discharged out through a discharge opening. The scroll compressor may be categorized into a low pressure type, an indirect suction type, and a high pressure type, a direct suction type according to a refrigerant suction method.

In the case of the low pressure scroll compressor, a suction space which is a low pressure space and a discharge space which is a high pressure space have to be separated from each other at the time of a normal driving. On the other hand, when the low pressure scroll compressor has a very low suction pressure such as a pump down driving mode or a cycle blocking driving mode, the suction space and the discharge space communicate with each other. In this state, a high pressure refrigerant discharged to the discharge space backflows to the suction space. Accordingly, the refrigerant which backflows to the suction space is supplied to the compression chamber, thereby preventing a high-vacuum driving of the scroll compressor.

In the case of the high pressure scroll compressor, a suction opening which is a low pressure space and an inner space of a hermetic container which is a high pressure space have to be separated from each other at the time of a normal driving mode. On the other hand, at the time of a pump down driving mode or a cycle blocking driving mode, the suction opening and the inner space of the hermetic container communicate with each other. In this state, a refrigerant discharged to the inner space of the hermetic container is partially re-introduced to the suction opening. This may prevent a high-vacuum driving of the scroll compressor.

In order to selectively shield the low pressure space and the high pressure space of the scroll compressor according to a driving condition of the scroll compressor, a valve assembly may be installed at a flow path between the low pressure space and the high pressure space. The valve assembly may be configured to automatically open and close the flow path between the low pressure space and the high pressure space by being automatically operated according to a pressure difference between the low pressure space and the high pressure space.

However, the conventional scroll compressor may have the following problems.

Firstly, the valve assembly for preventing high-vacuumization of the low pressure space consists of a plurality of components, and the components have to be individually assembled to one another in the assembly processes of the compressor. This may cause the scroll compressor to have complicated fabrication processes.

Secondly, since the valve assembly is disposed between the low pressure space and the high pressure space, a large pressure difference occurs therebetween. This may cause a refrigerant of the high pressure space to be leaked to the low pressure space even while the scroll compressor performs a normal driving mode, resulting in lowering of a performance of the scroll compressor.

WO 2007/114531 A1 relates to an apparatus for preventing vacuum of a scroll compressor, comprising: a fixed scroll having a bypass hole through which a suction chamber of a casing is connected to a discharge chamber of the casing; a valve block having an inner channel through which the bypass hole of the fixed scroll is connected to the discharge chamber of the casing, and fixedly installed at the fixed scroll; and a valve member disposed between the bypass hole of the fixed scroll and the inner channel of the valve block, for opening and closing between the bypass hole and the inner channel. The apparatus is assembled at an outer periphery of the fixed scroll. A similar preventive apparatus of vacuum compression in a scroll compressor is disclosed in KR 2006001487 A.

US 2009/0169405 A1 relates to a compressor comprising: a compressor main body in which fluid inhaled from an inhale port is compressed, and the compressed fluid is exhausted from an exhaust port; and a pressure retaining device where provided on the exhaust port side of the compressor main body, and retaining pressure on the exhaust port side, wherein the pressure retaining device comprises: a valve body communicating with the exhaust port; an urging member normally urging the valve body into a direction to be closed; and a back-pressure means where an intermediate pressure between the inhale port of the exhaust port of the compressor main body is introduced as back-pressure which affects the valve body, and wherein the valve body of the pressure retaining device is operable according to difference between pressure at the exhaust port and the intermediate pressure of the back-pressure means and force by the urging member.

Therefore, an object of the present invention is to provide a scroll compressor capable of having simplified assembly processes by modularizing a valve assembly, and thus capable of reducing fabrication costs.

Another object of the present invention is to provide a scroll compressor capable of having an enhanced performance by reducing leakage of a refrigerant to a low pressure space from a high pressure space in a normal driving mode, by reducing a pressure difference at the periphery of the valve assembly.

These objects are solved with the features of the claims.

According to another aspect of the present invention, a sealing recess is formed at a contact surface between the compression unit and the valve assembly, and the sealing recess is formed so as to communicate with an intermediate part of the compression chamber.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a longitudinal section view of a low pressure type scroll compressor according to the present invention;
FIG. 2 is a longitudinal section view showing a state that a vacuumization prevention unit is installed at an outer side of a fixed scroll according to the present invention;
FIG. 3 is a disassembled perspective view of the vacuumization prevention unit of FIG. 2;
FIG. 4 is a longitudinal section view showing an assembled state of the vacuumization prevention unit of FIG. 3;
FIG. 5 is a bottom planar view of the vacuumization prevention unit;
FIG. 6 is a longitudinal section view of a fixing portion of the vacuumization prevention unit of FIG. 4;
FIG. 7 is a longitudinal section view showing a coupling method of a housing cover of the vacuumization prevention unit of FIG. 4;
FIG. 8 is a longitudinal section view showing an operation of the vacuumization prevention unit when a scroll compressor performs a normal operation;
FIG. 9 is a longitudinal section view showing an operation of the vacuumization prevention unit when the scroll compressor performs a high-vacuum driving;
FIG. 10 is a longitudinal section view showing a vacuumization prevention unit of the scroll compressor according to another embodiment of the present invention; and
FIG. 11 is a longitudinal section view showing a vacuumization prevention unit of the scroll compressor according to still another embodiment of the present invention.

Description will now be given in detail of the present invention, with reference to the accompanying drawings.

For the sake of brief description with reference to the drawings, the same or equivalent components will be provided with the same reference numbers, and description thereof will not be repeated.

Hereinafter, a scroll compressor according to the present invention will be explained in more detail with reference to the attached drawings.

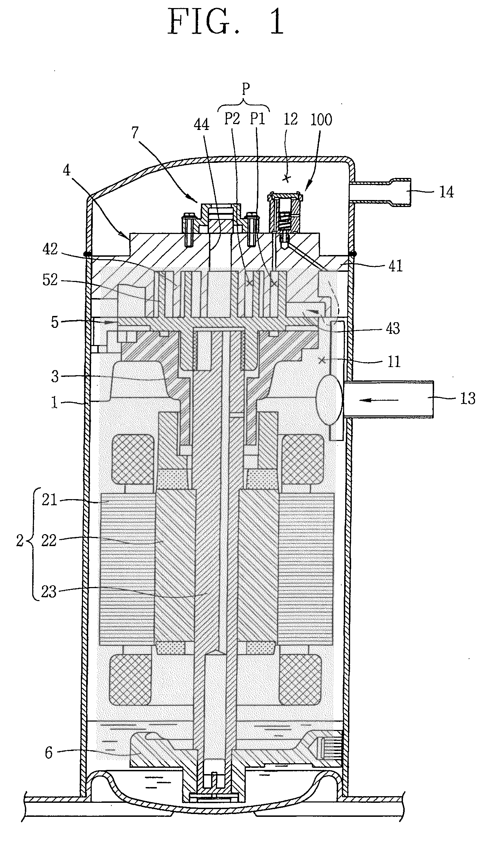

FIG. 1 is a longitudinal section view of a low pressure type scroll compressor according to the present invention.

As shown, the low pressure type scroll compressor according to the present invention (hereinafter, will be referred to as a 'scroll compressor') comprises a hermetic container 1 having an inner space divided into a suction space 11, a low pressure space and a discharge space 12, a high pressure space, a driving motor 2 installed at the suction space 11 of the hermetic container 1 and generating a rotational force, a main frame 3 fixedly-installed between the suction space 11 and the discharge space 12 of the hermetic container 1, a fixed scroll 4 fixedly-installed on an upper surface of the main frame 3, and an orbiting scroll 5 installed between the main frame 3 and the fixed scroll 4, eccentrically coupled to a crank shaft 23 of the driving motor 2, and forming a pair of compression chambers (P) which consecutively move together with the fixed scroll 4.

The inner space of the hermetic container 110 is divided into the suction space 11 and the discharge space 12 by the fixed scroll 4. A suction pipe 13 is coupled to the suction space 11 so as to communicate therewith, and a discharge pipe 14 is coupled to the discharge space 12 so as to communicate therewith.

Although not shown, the inner space of the hermetic container may be divided into a suction space, a low pressure space and a discharge space, a high pressure space by a discharge planem having a hermetic discharge space and fixedly coupled to the fixed scroll. Alternatively, the inner space of the hermetic container may be divided into a suction space and a discharge space by a high and low pressure separation plate (not shown) fixed to an upper surface of the fixed scroll and closely contacting an inner circumferential surface of the hermetic container.

The fixed scroll 4 is provided with a fixed wrap 42 protruding from a bottom surface of a plate portion 41, and having an involute shape so as to form a compression chamber (P) together with an orbiting wrap 51 of the orbiting scroll 5. A suction opening 43 is formed on a bottom surface of an outer circumferential surface of the plate portion 41 of the fixed scroll so that the suction space 11 of the hermetic container 1 can communicate with the compression chamber (P). And, a discharge opening 44 is formed at the center of the plate portion 41 of the fixed scroll 4 so that the discharge space 12 of the hermetic container 1 can communicate with the compression chamber (P).

The orbiting scroll 5 is provided with an orbiting wrap 52 protruding from an upper surface of a plate portion 51, and having an involute shape so as to form a compression chamber (P) together with the fixed wrap 42.

Unexplained reference numeral 6 denotes a sub-frame, 7 denotes a check valve, 21 denotes a stator, and 22 denotes a rotor.

The scroll compressor according to the present invention is operated as follows.

Once the driving motor 2 generates a rotational force by receiving power supplied thereto, the orbiting scroll 5 eccentrically coupled to the crank shaft 23 of the driving motor 2 forms a pair of compression chambers (P) which consecutively move between the orbiting scroll 5 and the fixed scroll 4 while performing an orbiting motion. The compression chambers (P) implemented to have a volume gradually decreased toward the discharge opening 44 (discharge chamber) from the suction opening (suction chamber) 43 are consecutively formed through a plurality of stages. Here, an outer compression chamber is refereed to as a first middle compression chamber (P1), and an inner compression chamber is refereed to as a second middle compression chamber (P2).

A refrigerant supplied from outside of the hermetic container 1 is introduced into the suction space 11, a low pressure space of the hermetic container 1 through the suction pipe 13. The low pressure refrigerant of the suction space 11 is introduced to the first middle compression chamber (P1) through the suction opening 43 of the fixed scroll 4, and is moved to the second middle compression chamber (P2) in a compressed state by the orbiting scroll 5. Then, the refrigerant is discharged to the discharge space 12 of the hermetic container 1 through the discharge opening 44 of the fixed scroll 4. These processes are repeatedly performed.

However, the scroll compressor may have the following problems. When an air conditioner having the scroll compressor is to be moved or when a pump down driving mode for collecting a refrigerant in a condenser is to be performed, the scroll compressor is operated in a state that a service valve of the suction pipe is closed. Here, the refrigerant filled in the inner space of the hermetic container 1 is completely discharged out to be moved to the condenser. In this case, the inner space of the scroll compressor may become high-vacuumized during the pump down driving. This may cause severe problems of the scroll compressor, such as damages of the driving motor 2 and a tip seal member for sealing the compression chamber.

In order to prevent these problems, as shown in FIG. 1, a vacuum prevention unit 100 for preventing high-vacuumization may be installed at the inner space of the scroll compressor. When the pressure of the compression chamber (P) becomes lower than a predetermined level or when the scroll compressor is stopped, the vacuumization prevention unit 100 allows a part of a refrigerant discharged to the discharge space 12 to backflow to the suction space 11 thus to be re-introduced into the compression chamber (P) by communicating the discharge space 12 (high pressure space) and the suction space 11 (low pressure space) with each other. The vacuumization prevention unit 100 may be installed inside the fixed scroll 4. However, in this case, inferiority may occur while the fixed scroll 4 is processed. Accordingly, it is preferable to installed the vacuumization prevention unit 100 outside the fixed scroll 4.

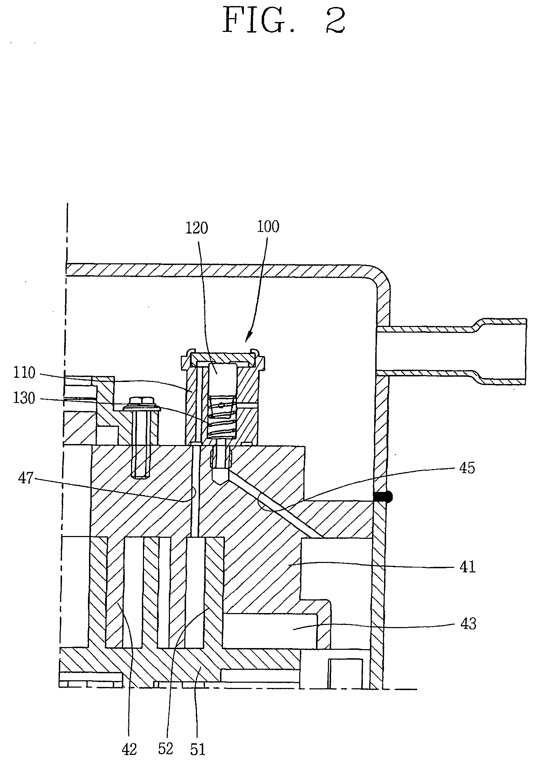

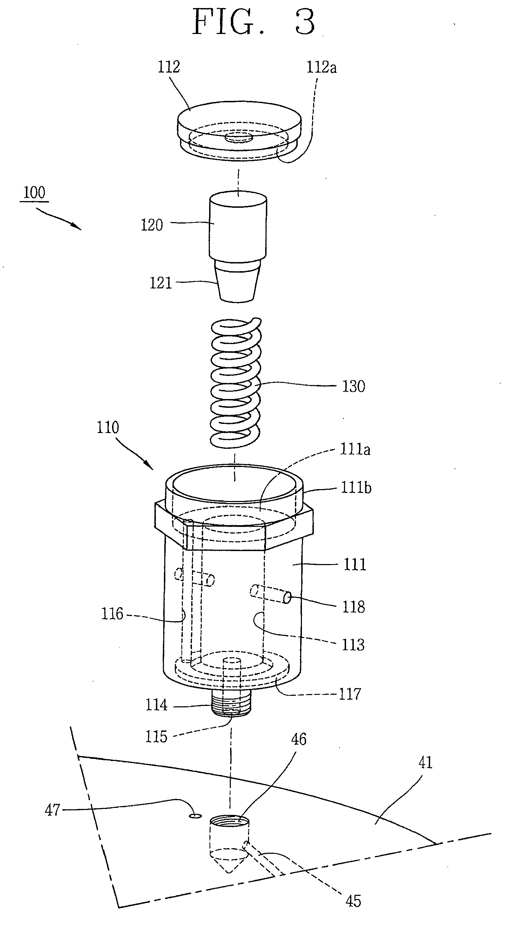

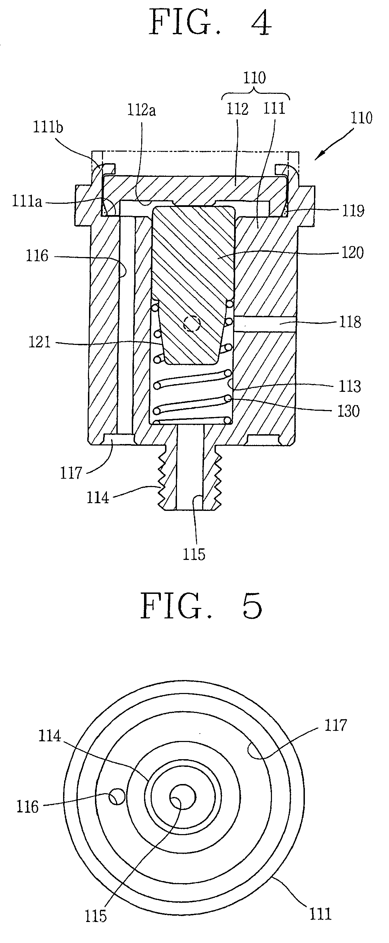

FIG. 2 is a longitudinal section view showing a state that a vacuumization prevention unit is installed at an outer side of a fixed scroll according to the present invention, FIG. 3 is a disassembled perspective view of the vacuumization prevention unit of FIG. 2, FIG. 4 is a longitudinal section view showing an assembled state of the vacuumization prevention unit of FIG. 3, and FIG. 5 is a bottom planar view of the vacuumization prevention unit.

Referring to FIGS. 2 to 5, the vacuumization prevention unit 100 according to the present invention includes a housing 110 coupled to an upper surface of the fixed scroll 4, a sliding valve 120 slidably inserted in the housing 110 in an axial direction and configured to selectively open and close a flow path between the discharge space 12 and the suction space 11 of the hermetic container 1, and a valve spring 130 configured to support the sliding valve 120 in an axial direction. When the respective components of the vacuumization prevention unit 100, i.e., the housing 110, the sliding valve 120 and the valve spring are assembled with another components, the scroll compressor may have complicated assembly processes. Accordingly, it is preferable to fabricate the vacuumization prevention unit 100 as a complete module in an additional process, and then to simply assemble the vacuumization prevention unit 100 at a compressor assembly spot. This may lower the fabrication costs of the scroll compressor.

The housing 110 consists of a housing body 111, and a housing cover 112 coupled to the housing body 111. A valve hole 113 is formed at the housing body 111, and the valve hole 113 is covered by a housing cover 112.

The valve hole 113 is formed to have a predetermined length at the center of the housing body 111. And, the valve hole 113 is formed in a cylindrical shape having a partially-blocked lower end, and a completely open upper end.

A fixing portion 114 configured to fix the housing body 111 to the fixed scroll 4 is protruding from the center of a bottom surface of the housing body 111. A suction pressure hole 115 configured to communicate the valve hole 113 and a first bypass passage 45 which will be later explained is penetratingly formed at the fixing portion 114 in a lengthwise direction.

The first bypass passage 45 is formed at the plate portion 41 of the fixed scroll 4 so as to communicate the discharge space 12 of the hermetic container 1 with the suction space 11. And, a valve mounting recess 46 having a sectional area larger than that of the first bypass passage 45 is formed at the end of the first bypass passage 45. A female screw thread configured to couple a male screw thread provided at the fixing portion 114 of the housing body 111 may be formed on an inner circumferential surface of the valve mounting recess 46. However, the fixing portion 114 may be inserted into the valve mounting recess 46 by pressing or by welding. In this case, a sealing member (not shown) such as an O-ring may be installed between the fixing portion 114 and the valve mounting recess 46.

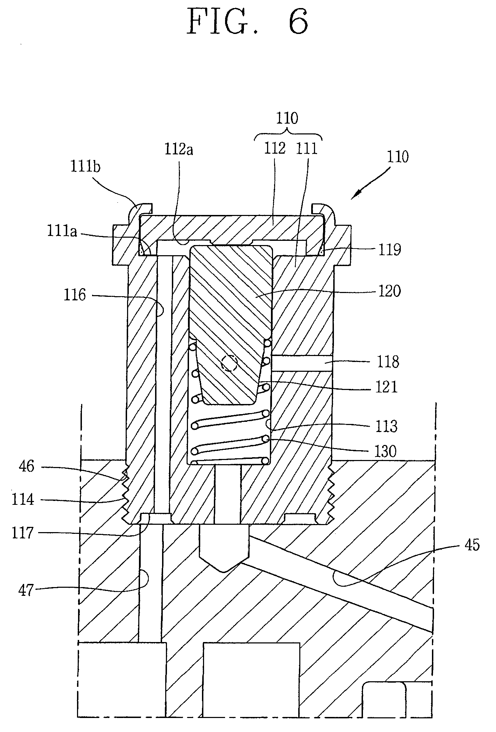

The housing body 111 may not be provided with the fixing portion 114 shown in FIG. 6, but may be provided with a male screw thread on an outer circumferential surface thereof. In this case, the male screw thread may be coupled to a female screw thread provided on an inner circumferential surface of the valve mounting recess 46. A second bypass passage 47 may be formed to be accommodated in the valve mounting recess 46. In this case, the fixing portion 114 may have an outer diameter larger than that when the fixing portion 114 is formed to have the protrusion shape. This may allow the housing to be stably fixed, and the scroll compressor to have an enhanced performance due to a large sealing area.

Although not shown, a fixing portion (not shown) may be formed on an outer circumferential surface of the housing body 111 in the form of a flange, and may be coupled to the housing body 111 by bolts.

A middle pressure hole 116 is penetratingly formed at one side of the valve hole 113 of the housing body 111 in a lengthwise direction from a lower end to an upper end of the housing body 111. A sealing recess 117 is formed at a lower end of the middle pressure hole 116, so that a refrigerant of a middle pressure (Pb) introduced through the second bypass passage 47 provided at the plate portion 41 of the fixed scroll 4 can encompass the periphery of the fixing portion (more concretely, the suction pressure hole) 114.

As shown in FIG. 5, the sealing recess 117 is preferably formed to have a ring shape so as to always communicate with the second bypass passage when assembling the vacuumization prevention unit 100. For prevention of communication between the two compression chambers, the second bypass passage 47 is preferably formed to have a size not to larger than a gap between itself and the fixed wrap 42, preferably a size smaller than the gap.

Although not shown, the sealing recess 117 may be formed in a ring shape so as to communicate with the middle pressure hole 116 on an upper surface of the fixed scroll 4, i.e., the periphery of the second bypass passage 116.

A discharge pressure hole 118 is penetratingly formed at an intermediate height of the housing body 111 in a radius direction from an outer circumferential surface of the housing body 111 to an inner circumferential surface of the valve hole 113.

Preferably, a stepped surface 111a for mounting the housing cover 112 is formed on an upper end of the housing body 111, and a cover supporting portion 111b for inserting the housing cover 112 is formed on an outer circumferential surface of the stepped surface 111a in a ring shape. The cover supporting portion 111b is preferably formed to have a length long enough to forcibly insert the housing cover 112 therein, and then to bent to support the housing cover 112 in a pressing manner.

The housing cover 112 is formed in a disc shape so as to be forcibly inserted into the cover supporting portion 111b of the housing body 111. A communication recess 112a configured to communicate the middle pressure hole 47 of the housing body 111 with the valve hole 113 is formed on a bottom surface of the housing cover 112 in a ring shape.

A sealing member 119 such as an O-ring may be inserted between the housing body 111 and the housing cover 112.

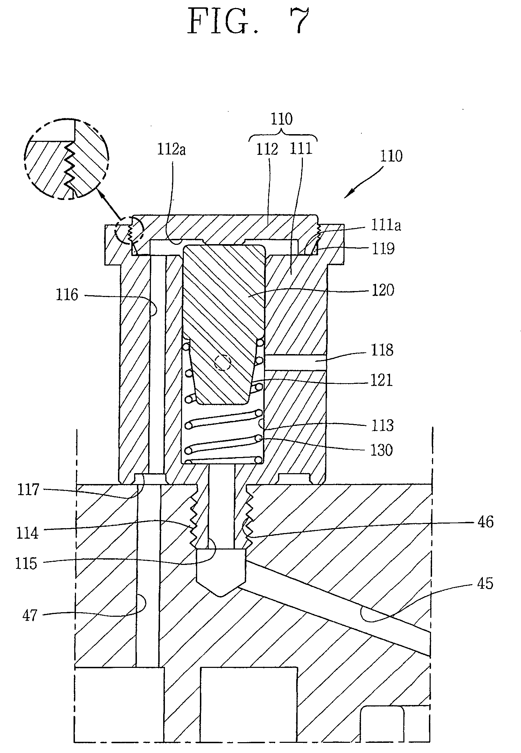

As shown in FIG. 7, an outer circumferential surface of the housing cover 112 may be screw-coupled to the cover supporting portion 111b of the housing body 111.

The sliding valve 120 may be formed to have a size large enough for an outer circumferential surface thereof to slidably contact an inner circumferential surface of the valve hole 113, and may be formed of a material having a light weight and a lubrication characteristic such as metal or engineer plastic. A fixing protrusion 121 may be formed on a bottom surface of the sliding valve 120 so as to forcibly insert an upper end of the valve spring 130 thereinto.

The valve spring 130 is implemented as a compression coil spring having both ends fixed to a lower end of the housing body 111 and the bottom surface of the sliding valve 120, respectively. And, the valve spring 130 is formed to have elasticity large enough to allow an upward motion of the sliding valve 120 (i.e., an operation to open the discharge pressure hole as the sliding valve is rapidly moved up when the compression chamber becomes high-vacuumized).

The operation of the vacuumization prevention unit of the scroll compressor according to the present invention will be explained.

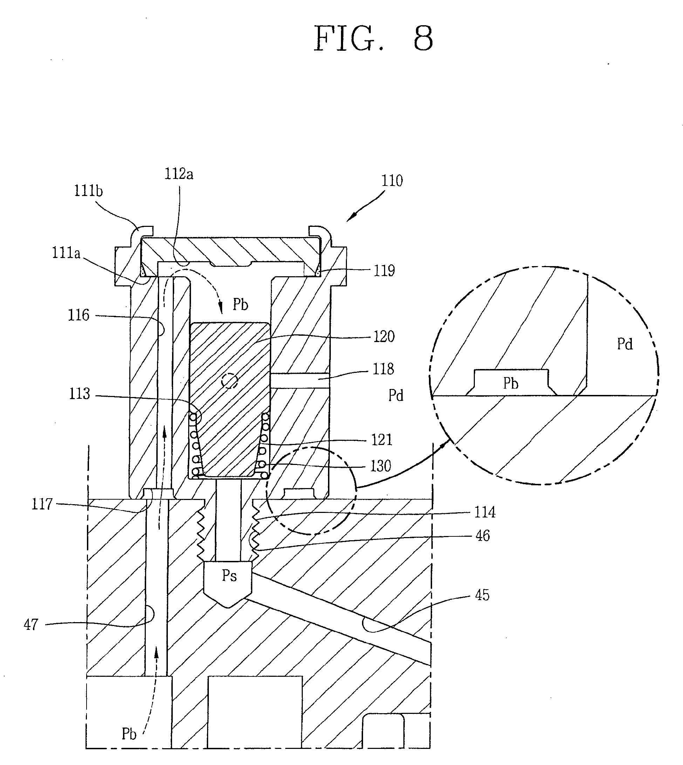

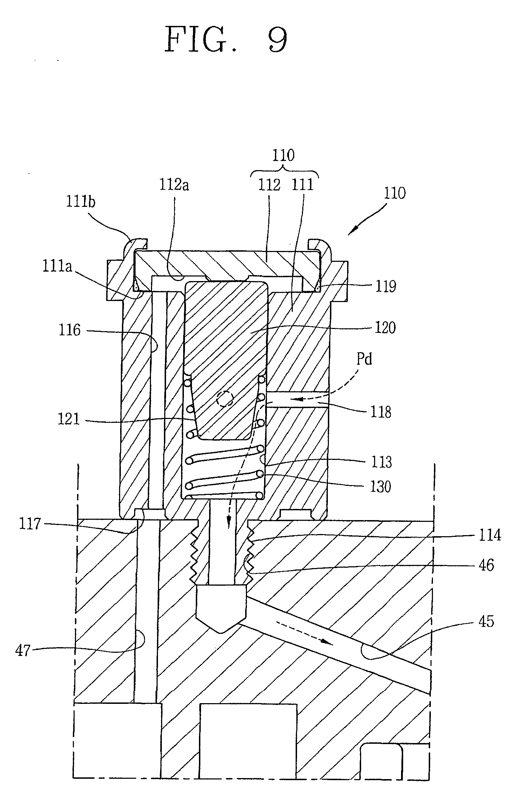

FIG. 8 is a longitudinal section view showing an operation of the vacuumization prevention unit when a scroll compressor performs a normal operation, and FIG. 9 is a longitudinal section view showing an operation of the vacuumization prevention unit when the scroll compressor performs a high-vacuum driving.

As shown in FIG. 8, when the scroll compressor is normally operated, a refrigerant inside the compression chamber (P) is introduced into an upper end of the valve hole 112 through the second bypass passage 47, the middle pressure hole 116 and the communication recess 112a. Then, the refrigerant applies elasticity to an upper surface of the sliding valve 120. The sliding valve 120 overcomes the elasticity of the valve spring 130, and downward moved to block the discharge pressure hole 118.

Here, the refrigerant of a middle pressure (Pb) is introduced into the sealing recess 117 of the housing body 111 through the second bypass passage 47, thereby encompassing the suction pressure hole 115. As a result, a damping space having the middle pressure (Pb) of a discharge pressure (Pd) and a suction pressure (Ps) is formed between the discharge space 12 and the suction pressure hole 11. This may effectively prevent a refrigerant discharged to the discharge space 12 from leaking to the first bypass passage 45 through the vacuumization prevention unit 100 when the scroll compressor is operated in a normal driving mode. Accordingly, lowering of a performance of the scroll compressor may be prevented.

On the other hand, when the scroll compressor performs a high-vacuum driving as shown in FIG. 9, the compression chamber (P) has a drastically lowered pressure. As a result, a pressure applied to an upper end of the sliding valve 120 is lowered more than in a normal driving mode. As the sliding valve 120 is upward moved by a restoration force of the valve spring 130, the discharge pressure hole 118 is open. The refrigerant having been filled in the discharge space 12 is discharged to the valve hole 112 through the discharge pressure hole 118, and then is introduced into the suction space 11 through the suction pressure hole 115 and the first bypass passage 45. As a result, the suction space 11 is prevented from having a drastically-increased temperature, and thus damages of the driving motor 2 are prevented. The refrigerant sucked to the suction space 11 is supplied to the compression chamber (P), and then is discharged to the discharge space 12. These processes are repeatedly performed.

As the suction pressure hole 115 is formed at a lower end of the housing body 111, the suction pressure hole 115 and the first bypass passage 45 have short lengths. Accordingly, when the compression chamber (P) becomes high-vacuumized, the refrigerant inside the discharge space 12 backflows to the suction space 11 more rapidly. This may prevent the scroll compressor from being in the high-vacuumized state.

Hereinafter, a vacuumization prevention unit of the scroll compressor according to another embodiment of the present invention will be explained.

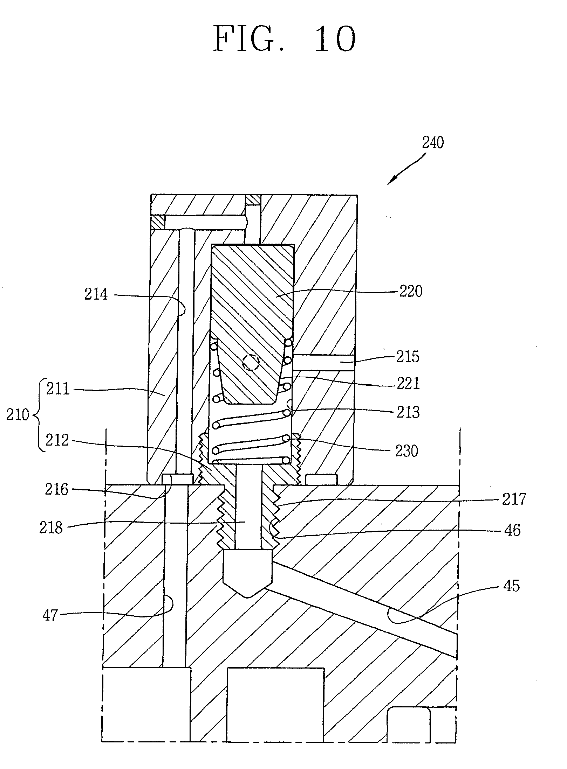

In the aforementioned embodiment, the housing consists of the housing body, and the housing cover configured to cover an open end of the housing body. However, in this preferred embodiment, the housing consists of a first housing and a second housing. FIG. 10 is a longitudinal section view showing a vacuumization prevention unit of the scroll compressor according to another embodiment of the present invention.

Referring to FIG. 10, a housing 210 consists of a first housing 211 and a second housing 212. The first housing 211 includes a valve hole 213 formed in an upper and lower direction and configured to slidably insert a sliding valve 220 thereinto, a middle pressure hole 214 formed at one side of the valve hole 213 in a lengthwise direction and which communicates with an upper end of the valve hole 213, and a discharge pressure hole 215 which communicates with an intermediate part of the valve hole 213. The middle pressure hole 214 is penetratingly formed at the valve hole 213 in a lengthwise direction and a radius direction, and has the end closed by a member such as a bolt closure. Accordingly, the middle pressure hole 214 is implemented as a single hole.

The second housing 212 is coupled to a lower end of the first housing 211 by pressing, or by welding, or by using bolts, so as to cover a lower end of the valve hole 213. A sealing member (not shown) such as an O-ring may be inserted between the first housing 211 and the second housing 212 for an enhanced sealing effect. A sealing recess 216 having a ring shape is formed at a lower end of the middle pressure hole 214 so as to communicate with the second bypass passage 47 of the fixed scroll 4.

A fixing portion 217 is formed at the second housing 212 so as to be inserted into the valve mounting recess 46 of the fixed scroll 4. This fixing portion 217 may be protruding from the center of a lower surface of the second housing 212 by a predetermined height, or may be implemented by a lower part of the second housing 212 as shown in FIG. 6. In a case that a female screw thread is formed on an inner circumferential surface of the valve mounting recess 46, the fixing portion 217 may be provided with a male screw thread screw-coupled to the female screw thread.

Like in the aforementioned preferred embodiment, a suction pressure hole 218 may be formed at the center of the fixing portion 217. Other configurations and effects are similar to those of the aforementioned embodiment, and thus their detailed explanations will be omitted.

In this preferred embodiment, the housing 210 consists of the first housing 211 and the second housing 212. This may effectively seal an upper end of the valve hole 213, thereby enhancing reliability of the vacuumization prevention unit.

The vacuumization prevention unit of the scroll compressor according to another embodiment of the present invention will be explained.

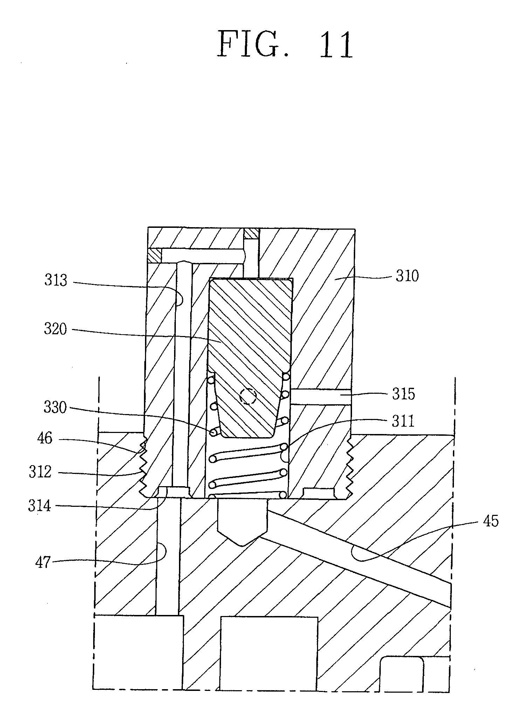

In the aforementioned embodiment, the housing is formed by combining a plurality of components with each other. However, in this preferred embodiment, the housing consists of one component. FIG. 11 is a longitudinal section view showing a vacuumization prevention unit of the scroll compressor according to still another embodiment of the present invention.

Referring to FIG. 11, a housing of the vacuumization prevention unit according to this preferred embodiment includes a housing body 310 formed in a cylindrical shape having one open end and another closed end, a sliding valve 320 and a valve spring 330 provided at the housing body 310.

The housing body 310 is provided with a valve hole 311 at the center thereof, and a lower end of the valve hole 311 is open to implement a suction pressure hole (not shown). The housing body 310 is insertingly-coupled to the valve mounting recess of the first bypass passage 45. A fixing portion 312 having a male screw thread so as to be coupled to a female screw thread of the valve mounting recess 46 is formed at a lower end of the housing body 310, i.e., an outer circumferential surface of the opening. The fixing portion may be coupled to the valve mounting recess by pressing or by welding. A middle pressure hole 313 is formed at one side of the valve hole 311 in a lengthwise direction, and a sealing recess 314 is formed at a lower end of the middle pressure hole 313 in a ring shape so as to communicate with the second bypass passage 47 of the fixed scroll 4.

A discharge pressure hole 315 configured to communicate a discharge space 12 and a suction space 11 with each other is formed at an intermediate part of the valve hole 311. Other configurations and effects of a vacuumization prevention unit according to this preferred embodiment are similar to those of the aforementioned embodiment, and thus their detailed explanations will be omitted. In this preferred embodiment, the housing consists of one component, which may reduce the fabrication costs. However, as the suction pressure hole of the housing is open, the vacuumization prevention unit may have a difficulty in being modularized. Accordingly, at the opening of the vacuumization prevention unit, may be provided a temporary closure configured to block the opening when moving the vacuumization prevention unit, but to open the opening when assembling the vacuumization prevention unit to the scroll compressor.

In the scroll compressor according to the present invention, the vacuumization prevention unit consists of one component thus to be modularized. This may simplify the assembly processes of the scroll compressor. Furthermore, a middle pressure is formed between inside and outside of the vacuumization prevention unit. This may prevent lowering of a performance of the scroll compressor resulting from leakage of a refrigerant of the discharge space to the suction space through the vacuumization prevention unit.

In the present invention, the vacuumization prevention unit is applied to a low pressure type scroll compressor in which the inner space of the hermetic container is divided into the suction space and the discharge space. However, the vacuumization prevention unit may be also applied to a high pressure type scroll compressor in which the inner space of the hermetic container forms the discharge space. In this case, the first bypass passage may be formed so as to communicate with the suction opening of the fixed scroll.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. A scroll compressor, comprising:
a hermetic container (1) having an inner space divided into a low pressure space (11) and a high pressure space (12);
a compression unit installed at the inner space of the hermetic container (1), and forming a compression chamber (P) which is configured to consecutively move as spiral wraps (42, 52) provided at a plurality of scrolls (4, 5) perform a relative motion by being interlocked with one another, and forming a discharge opening (44) configured to discharge compressed refrigerant of the compression chamber (P) toward the high pressure space (12); and
a valve assembly (100) installed between the low pressure space (11) and the high pressure space (12) of the hermetic container (1), and configured to selectively communicate the low pressure space (11) and the high pressure space (12) with each other,
wherein the valve assembly (100) includes:
a housing (110, 210) installed between the low pressure space (11) and the high pressure space (12),
having a valve hole (113, 213, 311) to communicate the high pressure space (12) and the low pressure space (11) with each other,
having a suction pressure hole (115) to communicate the valve hole (113, 213, 311) and the low pressure space (11), and
having a discharge pressure hole (118, 215, 315) to communicate the valve hole (113, 213, 311) and the high pressure space (12);
a valve (120, 220, 320) slidably inserted into the valve hole (113, 213, 311) of the housing (110, 210), and configured to selectively open and close a flow path between the low pressure space (11) and the high pressure space (12); and
an elastic member (130, 230, 330) disposed at the valve hole (113, 213, 311) of the housing (110, 210), and configured to elastically support the valve (120, 220, 320), wherein a fixing portion (114, 217, 312) configured to fix the valve assembly (100) to the compression unit is formed at the housing (110, 210), **characterised in that** a first bypass passage (45) configured to communicate the low pressure space (11) and the high pressure space (12) with each other is formed at the compression unit, the fixing portion (114, 217, 312) being coupled to the first bypass passage (45),
wherein a valve mounting recess (46) is formed at an end of the first bypass passage (45) and the fixing portion (114, 217, 312) is coupled to the valve mounting recess (46), and
wherein a suction pressure hole (115, 218) is formed at the fixing portion (114) so as to communicate with the first bypass passage (45).

2. The scroll compressor of claim 1, wherein a second bypass passage (47) configured to communicate an intermediate part of the compression chamber (P) and the high pressure space (12) with each other is formed at the compression unit,
wherein a middle pressure hole (116, 214, 313) configured to communicate the second bypass passage (47) and the valve hole (113, 213, 311) with each other is formed at the housing (110, 210),
wherein an end of the middle pressure hole (116, 214) is disposed at an opposite side to an end of the suction opening based on the valve (120, 220, 320) interposed therebetween,
wherein the discharge pressure hole (118, 215, 315) is formed between the middle pressure hole (116, 214, 313) and the suction pressure hole (115, 218).

3. The scroll compressor of claim 2 further comprising a sealing recess (117) formed between the second bypass passage (47) and the middle pressure hole (116), and
wherein the sealing recess (117) surrounds the suction pressure hole (115, 218).

4. The scroll compressor of any one of claims 2 to 3, wherein a diameter of the second bypass passage (47) is formed to be equal to or smaller than a gap between the wraps (42, 52).

5. The scroll compressor of claim 2, wherein the housing (110) comprises:
a housing body (111) having the valve hole (113), the middle pressure hole (116), the suction pressure hole (115), and the discharge pressure hole (118); and a housing cover (112) configured to cover the valve hole (113).

6. The scroll compressor of claim 5, wherein the housing body (111) and the housing cover (112) are press-coupled, welded, or bolted to each other.

7. The scroll compressor of claim 2, wherein the housing body (111) is provided with a cover supporting portion (111b) configured to support the housing cover (112) by bending an end thereof.

8. The scroll compressor of any one of claims 1 to 7, wherein a sealing member (119) is interposed between the housing body (111) and the housing cover (112).

9. The scroll compressor of any one of claims 1 to 7, wherein a sealing member is interposed between the housing body (111) and the fixed scroll (4).

10. The scroll compressor of claim 5, wherein the middle pressure hole (116) is penetratingly formed at the housing body (111) in a lengthwise direction, and a communication recess (112a) configured to communicate the middle pressure hole (116) and the valve hole (113) with each other is formed at the housing cover (112).

11. The scroll compressor of any one of claims 1 or 2, wherein the housing (210) comprises:
a first housing (211) having the valve hole (213), the middle pressure hole (214), and the discharge pressure hole (215); and
a second housing (212) configured to cover the valve hole (213) of the first housing (211), and having the suction pressure hole (218).

12. The scroll compressor of claim 11, wherein the first housing (211) and the second housing (212) are press-coupled, welded or bolted to each other.

13. The scroll compressor of claim 11, wherein a sealing member is interposed between the first housing (211) and the second housing (212).

14. The scroll compressor of any one of claims 1 or 2, wherein the housing consists of a housing body (310) having the valve hole (311), the middle pressure hole (313) and the discharge pressure hole (315),
wherein one end of the valve hole (311) which constitutes an opening of the housing body (310) is open to be connected to the first bypass passage (45), and is fixed to the compression unit.

## Patentansprüche

1. Spiralverdichter, der aufweist:
einen hermetischen Behälter (1) mit einem Innenraum, der in einen Niederdruckraum (11) und einen Hochdruckraum (12) unterteilt ist;
eine Verdichtungseinheit, die an dem Innenraum des hermetischen Behälters (1) installiert ist und eine Verdichtungskammer (P) bildet, die aufgebaut ist, um sich fortlaufend zu bewegen, während spiralförmige Verdichterhüllen (42, 52), die an mehreren Spiralen (4, 5) bereitgestellt sind, eine Relativbewegung durchführen, wobei sie ineinander greifen, und eine Abgabeöffnung (44) bildet, die aufgebaut ist, um verdichtetes Kältemittel der Verdichtungskammer (P) in Richtung des Hochdruckraums (12) abzugeben; und
eine Ventilanordnung (100), die zwischen dem Niederdruckraum (11) und dem Hochdruckraum (12) des hermetischen Behälters (1) installiert ist und aufgebaut ist, um den Niederdruckraum (11) und den Hochdruckraum (12) selektiv miteinander in Verbindung zu bringen,
wobei die Ventilanordnung (100) umfasst:
ein Gehäuse (110, 210), das zwischen dem Niederdruckraum (11) und dem Hochdruckraum (12) installiert ist,
mit einem Ventilloch (113, 213, 311), um den Hochdruckraum (12) und den Niederdruckraum (11) miteinander in Verbindung zu bringen,
mit einem Ansaugdruckloch (115), um das Ventilloch (113, 213, 311) und den Niederdruckraum (11) in Verbindung zu bringen, und
mit einem Ausstoßdruckloch (118, 215, 315), um das Ventilloch (113, 213, 311) und den Hochdruckraum (12) in Verbindung zu bringen;
ein Ventil (120, 220, 320), das verschiebbar in das Ventilloch (113, 213, 311) des Gehäuses (110, 210) eingesetzt ist und aufgebaut ist, um einen Strömungsweg zwischen dem Niederdruckraum (11) und dem Hochdruckraum (12) selektiv zu öffnen und zu schließen; und
ein elastisches Element (130, 230, 330), das an dem Ventilloch (113, 213, 311) des Gehäuses (110, 210) angeordnet ist und aufgebaut ist, um das Ventil (120, 220, 320) elastisch zu halten,
wobei ein Fixierabschnitt (114, 217, 312), der aufgebaut ist, um die Ventilanordnung (100) an der Verdichtungseinheit zu befestigen, an dem Gehäuse (110, 210) ausgebildet ist, **dadurch gekennzeichnet, dass**
ein erster Umleitungsdurchgang (45), der aufgebaut ist, um den Niederdruckraum (11) und den Hochdruckraum (12) miteinander in Verbindung zu bringen, an der Verdichtungseinheit ausgebildet ist, wobei der Befestigungsabschnitt (114, 217, 312) mit dem ersten Umleitungsdurchgang (45) gekoppelt ist,
wobei eine Ventilmontageaussparung (46) an einem Ende des ersten Umleitungsdurchgangs (45) ausgebildet ist und der Befestigungsabschnitt (114, 217, 312) mit der Ventilmontageaussparung (46) gekoppelt ist, und
wobei ein Ansaugdruckloch (115, 218) an dem Befestigungsabschnitt (114) ausgebildet ist, um mit dem ersten Umleitungsdurchgang (45) in Verbindung zu stehen.

2. Spiralverdichter nach Anspruch 1, wobei ein zweiter Umleitungsdurchgang (47), der aufgebaut ist, um einen Zwischenteil der Verdichtungskammer (P) und den Hochdruckraum (12) miteinander in Verbindung zu bringen, an der Verdichtungseinheit ausgebildet ist,
wobei ein Mitteldruckloch (116, 214, 313), das aufgebaut ist, um den zweiten Umleitungsdurchgang (47) und das Ventilloch (113, 213, 311) miteinander zu verbinden, an dem Gehäuse (110, 210) ausgebildet ist,
wobei ein Ende des Mitteldrucklochs (116, 214) ausgehend von dem dazwischen eingefügten Ventil (120, 220, 320) auf einer entgegengesetzten Seite zu einem Ende der Ansaugöffnung angeordnet ist,
wobei das Abgabedruckloch (118, 215, 315) zwischen dem Mitteldruckloch (116, 214, 313) und dem Ansaugdruckloch (115, 218) ausgebildet ist.

3. Spiralverdichter nach Anspruch 2, der ferner eine Dichtungsaussparung (117) aufweist, die zwischen dem zweiten Umleitungsdurchgang (47) und dem Mitteldruckloch (116) ausgebildet ist, und
wobei die Dichtungsaussparung (117) das Ansaugdruckloch (115, 218) umgibt.

4. Spiralverdichter nach einem der Ansprüche 2 bis 3, wobei ein Durchmesser des zweiten Umleitungsdurchgangs (47) derart ausgebildet ist, dass er gleich groß oder kleiner als ein Spalt zwischen den Hüllen (42, 52) ist.

5. Spiralverdichter nach Anspruch 2, wobei das Gehäuse (110) aufweist:
einen Gehäusekörper (111) mit dem Ventilloch (113), dem Mitteldruckloch (116), dem Ansaugdruckloch (115) und dem Abgabedruckloch (118); und
einer Gehäuseabdeckung (112), die aufgebaut ist, um das Ventilloch (113) abzudecken.

6. Spiralverdichter nach Anspruch 5, wobei der Gehäusekörper (111) und die Gehäuseabdeckung (112) miteinander druckgekoppelt, verschweißt oder verschraubt sind.

7. Spiralverdichter nach Anspruch 2, wobei der Gehäusekörper (111) mit einem Abdeckungshalteabschnitt (111b) versehen ist, der aufgebaut ist, um die Gehäuseabdeckung (112) durch Biegen eines seiner Enden zu halten.

8. Spiralverdichter nach einem der Ansprüche 1 bis 7, wobei ein Dichtungselement (119) zwischen dem Gehäusekörper (111) und der Gehäuseabdeckung (112) eingefügt ist.

9. Spiralverdichter nach einem der Ansprüche 1 bis 7, wobei ein Dichtungselement zwischen dem Gehäusekörper (111) und der festen Spirale (4) eingefügt ist.

10. Spiralverdichter nach Anspruch 5, wobei das Mitteldruckloch (116) den Gehäusekörper (111) in einer Längsrichtung durchdringend ausgebildet ist, und eine Verbindungsaussparung (112a), die aufgebaut ist, um das Mitteldruckloch (116) und das Ventilloch (113) miteinander in Verbindung zu bringen, an der Gehäuseabdeckung (112) ausgebildet ist.

11. Spiralverdichter nach einem der Ansprüche 1 oder 2, wobei das Gehäuse (210) aufweist:
ein erstes Gehäuse (211) mit dem Ventilloch (213), dem Mitteldruckloch (214) und dem Abgabedruckloch (215); und
ein zweites Gehäuse (212), das aufgebaut ist, um das Ventilloch (213) des ersten Gehäuses (211) zu bedecken, und das das Ansaugdruckloch (218) hat.

12. Spiralverdichter nach Anspruch 11, wobei das erste Gehäuse (211) und das zweite Gehäuse (212) miteinander druckgekoppelt, verschweißt oder verschraubt sind.

13. Spiralverdichter nach Anspruch 11, wobei ein Dichtungselement zwischen dem ersten Gehäuse (211) und dem zweiten Gehäuse (212) eingefügt ist.

14. Spiralverdichter nach einem der Ansprüche 1 oder 2, wobei das Gehäuse aus einem Gehäusekörper (310) mit dem Ventilloch (311), dem Mitteldruckloch (313) und dem Abgabedruckloch (315) besteht,
wobei ein Ende des Ventillochs (311), das eine Öffnung des Gehäusekörpers (310) bildet, offen ist, um mit dem ersten Umleitungsdurchgang (45) verbunden zu werden, und an der Verdichtungseinheit befestigt ist.

## Revendications

1. Compresseur à spirales, comprenant :
un récipient hermétique (1) comportant un espace intérieur divisé en un espace de basse pression (11) et un espace de haute pression (12) ;
une unité de compression installée au niveau de l'espace intérieur du récipient hermétique (1), et formant une chambre de compression (P) qui est configurée pour se déplacer consécutivement au fur et à mesure que des enroulements en spirales (42, 52) fournis au niveau d'une pluralité de spirales (4, 5) effectuent un mouvement relatif en étant enclenchés l'un avec l'autre, et formant une ouverture de décharge (44) configurée pour décharger un réfrigérant compressé de la chambre de compression (P) vers l'espace de haute pression (12) ; et
un ensemble de vanne (100) installé entre l'espace de basse pression (11) et l'espace de haute pression (12) du récipient hermétique (1), et configuré pour mettre l'espace de basse pression (11) et l'espace de haute pression (12) en communication sélective l'un avec l'autre,
dans lequel l'ensemble de vanne (100) comprend :
un logement (110, 210) installé entre l'espace de basse pression (11) et l'espace de haute pression (12),
comportant un trou de vanne (113, 213, 311) pour mettre l'espace de haute pression (12) et l'espace de basse pression (11) en communication l'un avec l'autre, comportant un trou de pression d'aspiration (115) pour mettre le trou de vanne (113, 213, 311) et l'espace de basse pression (11) en communication l'un avec l'autre, et comportant un trou de pression de décharge (118, 215, 315) pour mettre le trou de vanne (113, 213, 311) et l'espace de haute pression (12) en communication l'un avec l'autre ;
une vanne (120, 220, 320) insérée de manière à pouvoir coulisser dans le trou de vanne (113, 213, 311) du logement (110, 210), et configurée pour sélectivement ouvrir et fermer une voie d'écoulement entre l'espace de basse pression (11) et l'espace de haute pression (12) ; et
un organe élastique (130, 230, 330) disposé au niveau du trou de vanne (113, 213, 311) du logement (110, 210), et configuré pour supporter élastiquement la vanne (120, 220, 320),
dans lequel une portion de fixation (114, 217, 312) configurée pour fixer l'ensemble de vanne (100) à l'unité de compression est formée au niveau du logement (110, 210), **caractérisé en ce que**
un premier passage de dérivation (45) configuré pour mettre l'espace de basse pression (11) et l'espace de haute pression (12) en communication l'un avec l'autre est formé au niveau de l'unité de compression, la portion de fixation (114, 217, 312) étant couplée au premier passage de dérivation (45),
dans lequel un évidement de montage de vanne (46) est formé au niveau d'une extrémité du premier passage de dérivation (45) et la portion de fixation (114, 217, 312) est couplée à l'évidement de montage de vanne (46), et
dans lequel un trou de pression d'aspiration (115, 218) est formé au niveau de la portion de fixation (114) de manière à communiquer avec le premier passage de dérivation (45).

2. Compresseur à spirales selon la revendication 1, dans lequel un deuxième passage de dérivation (47) configuré pour mettre une partie intermédiaire de la chambre de compression (P) et l'espace de haute pression (12) en communication l'un avec l'autre est formé au niveau de l'unité de compression,
dans lequel un trou de pression central (116, 214, 313) configuré pour mettre le deuxième passage de dérivation (47) et le trou de vanne (113, 213, 311) en communication l'un avec l'autre est formé au niveau du logement (110, 210),
dans lequel une extrémité du trou de pression central (116, 214) est disposée au niveau d'un côté opposé à une extrémité de l'ouverture d'aspiration par rapport à la vanne (120,220, 320) interposée entre elles,
dans lequel le trou de pression de décharge (118, 215, 315) est formé entre le trou de pression central (116, 214, 313) et le trou de pression d'aspiration (115, 218).

3. Compresseur à spirales selon la revendication 2, comprenant en outre un évidement d'étanchéité (117) formé entre le deuxième passage de dérivation (47) et le trou de pression central (116), et
dans lequel l'évidement d'étanchéité (117) entoure le trou de pression d'aspiration (115,218).

4. Compresseur à spirales selon l'une quelconque des revendications 2 et 3, dans lequel un diamètre du deuxième passage de dérivation (47) est formé pour être inférieur ou égal à un espacement entre les enroulements (42, 52).

5. Compresseur à spirales selon la revendication 2, dans lequel le logement (110) comprend :
un corps de logement (111) comportant le trou de vanne (113), le trou de pression central (116), le trou de pression d'aspiration (115), et le trou de pression de décharge (118) ; et
un couvercle de logement (112) configuré pour recouvrir le trou de vanne (113).

6. Compresseur à spirales selon la revendication 5, dans lequel le corps de logement (111) et le couvercle de logement (112) sont couplés sous presse, soudés ou boulonnés l'un à l'autre.

7. Compresseur à spirales selon la revendication 2, dans lequel le corps de logement (111) est pourvu d'une portion de support de couvercle (111b) configurée pour supporter le couvercle de logement (112) en pliant une extrémité de celui-ci.

8. Compresseur à spirales selon l'une quelconque des revendications 1 à 7, dans lequel un organe d'étanchéité (119) est interposé entre le corps de logement (111) et le couvercle de logement (112).

9. Compresseur à spirales selon l'une quelconque des revendications 1 à 7, dans lequel un organe d'étanchéité est interposé entre le corps de logement (111) et la spirale fixe (4).

10. Compresseur à spirales selon la revendication 5, dans lequel le trou de pression central (116) est formé de manière pénétrante au niveau du corps de logement (111) dans un sens longitudinal, et un évidement de communication (112a) configuré pour mettre le trou de pression central (116) et le trou de vanne (113) en communication l'un avec l'autre est formé au niveau du couvercle de logement (112).

11. Compresseur à spirales selon l'une quelconque des revendications 1 ou 2, dans lequel le logement (210) comprend :
un premier logement (211) comportant le trou de vanne (213), le trou de pression central (214), et le trou de pression de décharge (215) ; et
un deuxième logement (212) configuré pour recouvrir le trou de vanne (213) du premier logement (211), et comportant le trou de pression d'aspiration (218).

12. Compresseur à spirales selon la revendication 11, dans lequel le premier logement (211) et le deuxième logement (212) sont couplés sous presse, soudés ou boulonnés l'un à l'autre.

13. Compresseur à spirales selon la revendication 11, dans lequel un organe d'étanchéité est interposé entre le premier logement (211) et le deuxième logement (212).

14. Compresseur à spirales selon l'une quelconque des revendications 1 ou 2, dans lequel le logement consiste en un corps de logement (310) comportant le trou de vanne (311), le trou de pression central (313) et le trou de pression de décharge (315), dans lequel une extrémité du trou de vanne (311) qui constitue une ouverture du corps de logement (310) est ouverte pour être reliée au premier passage de dérivation (45), et est fixée à l'unité de compression.
